# EUROPÄISCHE PATENTSCHRIFT

(11) **EP 1 641 350 B1**
(45) Veröffentlichungstag und Bekanntmachung des Hinweises auf die Patenterteilung: **24.09.2008**
(21) Anmeldenummer: 04739793.0
(22) Anmeldetag: 11.06.2004
(51) Int. Cl.: A23K 1/00, A23K 1/16, A23K 3/00, A23K 3/03

(54) **BESCHICHTETE ZUBEREITUNGEN, ENTHALTEND MINDESTENS EIN HYDROFORMIAT**
COATED PREPARATIONS THAT CONTAIN AT LEAST ONE HYDROFORMATE
PREPARATIONS ENROBEES CONTENANT AU MOINS UN HYDROFORMIATE

(30) Priorität: 24.06.2003 DE 10328519; 09.03.2004 DE 102004011832
(43) Veröffentlichungstag der Anmeldung: 05.04.2006
(73) Patentinhaber: BASF SE, 67056 Ludwigshafen (DE)
(72) Erfinder: KARL, Jörn, 67063 Ludwigshafen (DE); DIEBOLD, Gerd, 72768 Reutlingen (DE); HABICH, Andreas, 67346 Speyer (DE); BARTHEL, Holger, 68723 Schwetzingen (DE)
(86) Internationale Anmeldenummer: PCT/EP2004/006296
(87) Internationale Veröffentlichungsnummer: WO 2004/112496

(56) Entgegenhaltungen:
- EP-A- 0 009 366
- EP-A- 0 411 827
- EP-A- 1 273 238
- WO-A-99/12435
- WO-A-20/04017753
- GB-A- 1 587 518
- US-A- 4 220 661
- FURUMOTO CHIKASHI ET AL: "AMMONIUM TETRAFORMATE-CONTAINING COMPLETE FEED COMPOSITIONS AND THEIR MANUFACTURE" STN CAPLUS, 1989, XP002945138
- GIBBS B F ET AL: "ENCAPSULATION IN THE FOOD INDUSTRY: A REVIEW" INTERNATIONAL JOURNAL OF FOOD SCIENCES AND NUTRITION, CARFAX PUBLISHING LTD, GB, Bd. 50, Nr. 3, 1999, Seiten 213-224, XP009013399 ISSN: 0963-7486

## Beschreibung

Die vorliegende Erfindung betrifft beschichtete Zubereitungen enthaltend mindestens ein Hydroformiat sowie die Verwendung dieser Zubereitungen.

Ameisensaure Formiate und Herstellmethoden für diese sind seit langem bekannt. So ist in Gmelins Handbuch der anorganischen Chemie, 8. Auflage, Nummer 21, Seiten 816 bis 819, Verlag Chemie GmbH, Berlin 1928 sowie Nummer 22, Seiten 919 bis 921, Verlag Chemie GmbH, Berlin 1937 die Darstellung von Natriumdiformiat sowie von Kaliumdiformiat durch Lösen von Natriumformiat sowie von Kaliumformiat in Ameisensäure beschrieben. Durch Temperaturerniedrigung beziehungsweise durch Abdampfen überschüssiger Ameisensäure sind die kristallinen Diformiate zugänglich.

DE 424017 lehrt die Herstellung von ameisensauren Natriumformiaten mit verschiedenem Säuregehalt durch Einbringen von Natriumformiat in wässrige Ameisensäure in entsprechendem Molverhältnis. Durch Abkühlung der Lösung können die entsprechenden Kristalle erhalten werden.

Nach J. Kendall et al., Journal of the American Chemical Society, Vol. 43, 1921, Seiten 1470 bis 1481 sind ameisensaure Kaliumformiate durch Lösen von Kaliumcarbonat in 90%-iger Ameisensäure unter Bildung von Kohlendioxid zugänglich. Die entsprechenden Feststoffe können durch Kristallisation erhalten werden.

GB 1,505,388 offenbart die Herstellung carbonsaurer Carboxylat-Lösungen durch Mischen der Carbonsäure mit einer basischen Verbindung des gewünschten Kations in wässriger Lösung. So wird beispielsweise bei der Herstellung carbonsaurer Ammoniumcarboxylat-Lösungen Ammoniakwasser als basische Verbindung eingesetzt.

US 4,261,755 beschreibt die Herstellung von ameisensauren Formiaten durch Reaktion eines Überschusses an Ameisensäure mit dem Hydroxid, Carbonat oder Bicarbonat des entsprechenden Kations.

WO 96/35657 lehrt die Herstellung von Produkten, welche Disalze der Ameisensäure enthalten, durch Vermischen von Kalium-, Natrium-, Cäsium- oder Ammonium-Formiat, Kalium-, Natrium- oder Cäsium-hydroxid, -carbonat oder -bicarbonat oder Ammoniak mit gegebenenfalls wässriger Ameisensäure, anschließender Kühlung des Reaktionsgemisches, Filtration der erhaltenen Aufschlämmung und Trocknung des erhaltenen Filterkuchens sowie Rückführung des Filtrats.

Die unveröffentlichten deutschen Anmeldungen DE 101 547 15.3 und DE 102 107 30.0 beschreiben Verfahren zur Herstellung von Formiaten.

Ameisensaure Formiate besitzen eine antimikrobielle Wirkung und werden beispielsweise eingesetzt zur Konservierung sowie zur Ansäuerung von pflanzlichen und tierischen Stoffen, wie etwa von Gräsern, landwirtschaftlichen Produkten oder Fleisch, zur Behandlung von Bioabfällen oder als Additiv zur Tierernährung.

WO 96/35337 A1 beschreibt Tierfuttermittel und Tierfutterzusätze, welche Diformiate, insbesondere Kaliumdiformiat enthalten.

WO 97/05783 A1 (EP 845 947 A1) beschreibt ein Verfahren zur Kühlung und zur Konservierung von Fisch bei dem ein Kühlungsmittel mit Ameisensäure und/oder Mono/Di oder Tetrasalzen der Ameisensäure eingesetzt wird. In einer Ausführungsform wird dem Kühlungsmedium eine C1 bis C4 Monocarbonsäure zugesetzt.

WO 98/19560 (EP 957 690 A1) beschreibt ein Verfahren zu Herstellung eines Fischfutters bei dem Ammonium-, Natrium oder Kaliumdiformiat und Ameisensäure in ein Fischprodukte gegeben werden vor der Zugabe der weiteren Futtermittelbestandteile und Verarbeitung zu Fischfutter.

WO 98/20911 A1 (EP 961 620 B1) beschreibt ein Verfahren zur Behandlung von feuchtem organischem Abfall, bei dem man eine wässriger Zubereitung aus den Mono- und Disalzen von Format, Acetat oder Propionat einsetzt.

WO 01/19207 A1 beschreibt ein flüssiges Konservierungsmittel /Acidifier für Gras sowie landwirtschaftliche Erzeugnisse, Fische und Fischprodukte sowie Fleischprodukte, welches mindestens 50 Gew.-% Ameisensäure und Formate, Ammoniumtetraformat und 2-6 Gew.-% Kalium oder 2-10 Gew.-% Natrium in Form ihrer Hydroxide oder Formate enthält.

Die gemäß EP 0 824 511 B1 erhältlichen Diformiate können in einem sich dem Herstellungsverfahren anschließenden Schritt getrocknet werden. Man erhält Produkte, die als Pulver vorliegen und in der Regel unter 5 Gew.-% Wasser aufweisen. Die so erhältlichen Diformiate sind jedoch zur Formulierung in komplexen Substraten ungeeignet.

Die EP-A 1 273 238 offenbart die Verwendung von Zusammensetzungen enthaltend Kaliumdiformiat als Zusatz für Tierfuttermittel. In den Beispielen 1-4, 6-9 und 25-26 werden Zusammensetzungen basierend auf Mischungen von Kaliumdiformiat (Mol-Verhältnis Ameisensäure:Formiat = 1:1) und Trinatriumtetraformiat (Mol-Verhältnis Ameisensäure:Formiat = 1:3) offenbart. Den Zusammensetzungen können Trocknungsmittel wie z.B. Silica oder Stärke zugemischt werden, um die Lagerungs- und Verarbeitungseigenschaften zu verbessern.

Kommerziell erhältliche Zubereitungen enthaltend Diformiat, wie sie beispielsweise unter der Bezeichnung FORMI^{™} für die Tierernährung erhältlich sind, können in der Regel nicht in sog. Prämixe eingearbeitet werden, da es zu Verklumpungen und oder Verbackungen des Prämixes kommt, die eine weitere Verarbeitung des Prämixes zu Futtermitteln unmöglich macht.

Bei der Herstellung von Futtermitteln werden Vitamine, Mineralstoffe, Spurenelemente, organische Säure und ggf. Enzyme in Form sogenannter "Prämixe" oder "Base-Mixe" zubereitet und dann mit den übrigen Inhaltsstoffen des Futtermittels gemischt. Mischt man die nach dem Stand der Technik bekannten (so z.B. nach EP 0 824 511 B1 erhältlichen) Diformiate in einen "Prämix" ein, kommt es zu Verklumpungen und Verbackungen sowie zum Abbau von Inhaltsstoffen des Prämix.

Aufgabe der vorliegenden Erfindung bestand darin, Zubereitungen zu Verfügung zu stellen, die es ermöglichen Hydroformiate in komplexen Substrate, beispielsweise in Tierfuttermitteln oder Prämixen für Tierfuttermitteln einzuarbeiten, ohne dass es zu Verklumpungen oder Verbackungen des Substrates kommt. Dabei ist von besonderem Interesse, dass die übrigen Inhaltsstoffe des komplexen Substrats durch die Zumischung nicht beeinflusst werden. Besondere Bedeutung bei den komplexen Substraten haben die sogenannten "Base-Mixe" wie sie üblicherweise für die Futtermittelherstellung verwendet werden.

Aufgabe der vorliegenden Erfindung war es auch, Formulierungen von Hydroformiaten bereitzustellen, die bei der Verwendung in Futtermitteln eine vorzeitige Freisetzung der Ameisensäuresalze im Magen verhindern.

Es wurde gefunden, das diese Aufgabe mit den erfindungsgemäßen beschichteten Zubereitungen gelöst wird.

Ein Gegenstand der Erfindung sind demnach beschichtete Zubereitungen, enthaltend als Komponente A) mindestens ein Hydroformiat der allgemeinen Formel (I)

(I) M₃[HCOO]₃ · HCOOH

wobei M = Na, K, Cs, NH₄ bedeutet, und
als Komponente B) mindestens ein Beschichtungsmittel, ausgewählt aus der Gruppe bestehend aus
a) gehärtete pflanzliche Öle/Fette, die hydriert oder teilhydriert sind, und
b) Benzoesäure und/oder Salze der Benzoesäure und/oder Ester der Benzoesäure und/oder Derivate der Benzoesäure und/oder Salze der Benzoesäurederivate und/oder Ester der Benzoesäurederivate.

Der Begriff "beschichtete Zubereitungen" umfasst dabei alle Zubereitungen, bei denen die Oberfläche der Partikel der Zubereitung zu mindestens 50, insbesondere mindestens 70, ganz besonders bevorzugt mindestes 80, insbesondere mindestens 90 % bedeckt ist. Die Begriffe "beschichtet", "verkapselt", "bepudert", "umhüllt" und "gecoatet" werden im Sinne der vorliegenden Anmeldung synonym verwendet. Entsprechend werden die Begriffe Beschichtungsmittel/material, Coating-Material, Bepuderungsmittel, Hüllmittel und Beschichtungsmittel synonym verwendet.

Beschichtete Zubereitungen sind insbesondere solche Zubereitungen, die im Kontakt mit Calciumcarbonat chemisch weitgehend unverändert bleiben im Vergleich zu unbeschichteten Zubereitungen. Ein Parameter für eine chemische Veränderung der Hydroformiate ist die Freisetzung von CO₂.

### Hydroformiate

Die Verbindungen der allgemeinen Formel (I) werden entweder als Hydroformiate oder als Tetraformiate bezeichnet. Eine weitere übliche Bezeichnung ist Trinatrium/Kalium/Caesium/Ammoniumhydrogenformiat.

Die Darstellung von Na₃[HCOO]₃ · HCOOH ist in Gmelins Handbuch der organischen Chemie, 8. Auflage, Natrium, S. 21 beschrieben. Die erfindungsgemäß einzusetzenden Hydroformiate sind beispielsweise nach dem in EP 0 824 511 B1 beschriebenen Verfahren erhältlich oder nach den in den noch unveröffentlichten deutschen Patentanmeldungen DE 101 547 15.3 und DE 102 107 30.0 beschriebenen Verfahren.

Erfindungsgemäß einzusetzen sind Na₃[HCOO]₃ · HCOOH (Trinatriumhydrogenformiat), K₃[HCOO]₃ · HCOOH (Trikaliumhydrogenformiat), Cs₃[HCOO]₃ · HCOOH (Tricaesiumhydrogenformiat), NH₃[HCOO]₃ · HCOOH (Triammoniumhydrogenformiat).

Besonders bevorzugt als Hydroformiat ist Na₃[HCOO]₃ · HCOOH (Trinatriumhydrogenformiat).

In einer weiteren Ausführungsform können die genannten Hydroformiate in Mischungen untereinander eingesetzt werden.

Der Begriff "Zubereitung, enthaltend Hydroformiate" wird im folgenden verwendet und umfasst sowohl Zubereitungen, enthaltend mindestens ein Hydroformiat, sowie Zubereitungen, enthaltend Mischungen der genannten Hydroformiate.

Die Hydroformiate werden in den beschichteten Zubereitungen üblicherweise in Mengen von 0,01 bis 30 Gew.-%, insbesondere 0,1 bis 20, bevorzugt 1 bis 5, insbesondere 0,3 bis 5 Gew.-% bezogen auf die Gesamtzubereitung eingesetzt.

### Beschichtungsmittel

Als Beschichtungsmittel können alle Materialien eingesetzt werden, die in der Lage sind die Oberfläche von Zubereitungen, enthaltend mindestens ein Hydroformiat zumindest 50 %, insbesondere mindestens 70, ganz besonders bevorzugt mindestes 80, insbesondere mindestens 90 % zu bedecken.

Als Beschichtungsmittel können alle Materialien eingesetzt werden, die in der Lage sind Zubereitungen, enthaltend mindestens ein Hydroformiat so zu beschichten, dass diese im Kontakt mit Calciumcarbonat chemisch unverändert bleiben. Ein Parameter für eine chemische Veränderung der Hydroformiate ist die Freisetzung von CO₂. Diese wird nach der folgenden Methode bestimmt:

Je 20 g Futterkalk und Probe werden durchmischt in einen 100-ml-Erlenmeyerkolben gegeben und dieser über einen Aufsatz mit Schlauch mit einem umgekehrt aufgehängten und mit Wasser gefüllten Messzylinder verbunden. Der Erlenmeyerkolben wird bei 500 Upm/min auf einer Rüttelplatte geschüttelt und das entstehende CO₂ im Messzylinder aufgefangen. Die Messung wird bei Raumtemperatur (20 °C) durchgeführt. Die CO₂ Freisetzung wird über einen Zeitraum von 200, 600 und 800 Minuten gemessen. Als Beschichtungsmittel geeignet sind alle Verbindungen, die beschichtet Zubereitungen, enthaltend mindestens ein Hydroformiat, ergeben, bei denen eine Freisetzung von CO₂ nach 200 Minuten unter 100 ml, insbesondere unter 50 ml CO₂, insbesondere unter 25 ml CO₂ liegt.

Der Fachmann wählt die Methode der Beschichtung in Abhängigkeit von dem eingesetzten Beschichtungsmittel.

Der Fachmann wählt die Menge des Beschichtungsmittels in Abhängigkeit vom gewählten Beschichtungsmittel so, dass das Beschichtungsmittel zumindest 50 %, insbesondere mindestens 70, ganz besonders bevorzugt mindestes 80, insbesondere mindestens 90 % der Oberfläche der zu beschichtenden Zubereitung bedeckt. Übliche Einsatzmengen an Beschichtungsmittel sind hierbei beispielsweise 2 bis 50 Gew.-% bezogen auf die Zubereitungen, insbesondere 3 bis 35, bevorzugt 5 bis 20 Gew.-%.

Erfindungsgemäß können als Beschichtungsmittel gehärtete pflanzliche Öle/Fette, die hydriert oder teilhydriert sind, eingesetzt werden.

Als pflanzliche Öle kommen z.B. Sonnenblumen-, Distel-, Baumwollsaat-, Soja-, Maiskeim- und Olivenöl, Raps-, Lein-, Ölbaum-, Kokosnuss-, (Öl)Palmkern- und (Öl)Palmöl, in Betracht. Geeignete Palmöle sind beispielsweise unter dem Handelsnamen Vegelol PR 265 der Fa. Aarhus Oliefabrik erhältlich. Geeignete Raps(samen)öle sind unter dem Handelsnamen Vegeol PR 267 der Fa. Aarhus Oliefabrik erhältlich. Palmkernöl ist unter dem Handelsnamen Tefacid Palmic 90 (CAS Nr. 57-10-3) der Fa. Karlshamns erhältlich.

In einer bevorzugten Ausführungsform werden als Beschichtungsmittel eingesetzt hydrierte pflanzliche Öle einschließlich Triglyceride, wie z.B. hydrierte Baumwollsamen, Mais-, Erdnuss-, Sojabohnen-, Palm-, Palmkern-, Babassu-, Sonnenblumen- und Färberdistelöle. Bevorzugte hydrierte pflanzliche Öle umfassen hydriertes Palmöl, Baumwollsamenöl und Sojabohnenöl. Das am meisten bevorzugte hydrierte pflanzliche Öl ist hydriertes Sojabohnenöl.

Die bevorzugt eingesetzten hydrierten pflanzlichen Öle können in verschiedenen polymorphen Formen vorliegen, dieses sind die α-, β- und β'-Form. In einer besonders bevorzugten Ausführungsform der vorliegenden Erfindung werden hydrierte pflanzliche Öle eingesetzt, die überwiegend in der β- und β'- Form vorliegen, insbesondere solche, die überwiegend in der β-Form vorliegen. Unter dem Begriff "überwiegend" ist zu verstehen, dass mindestens 25 %, insbesondere mindestens 50 %, bevorzugt mindestens 75 % der Kristall in der bevorzugten polymorphen Form vorliegen.

Besonders bevorzugt ist der Einsatz von hydriertem Sojabohnenöl mit einem Anteil von über 50 %, insbesondere über 75 %, bevorzugt über 90 % β und/oder β'-Form.

In einer bevorzugten Ausführungsform sind die erfindungsgemäß beschichteten Zubereitungen mit einem Beschichtungsmittel versehen, welches wenigstens eine Verbindung enthält, die ausgewählt ist aus der Gruppe bestehend aus Benzoesäure und/oder Salzen der Benzoesäure und/oder Ester der Benzoesäure und/oder Derivaten der Benzoesäure und/oder Salzen der Benzoesäurederivate und/oder Ester der Benzoesäurederivate.

Als Salze der Benzoesäure bzw. Benzoesäurederivate seinen Alkali- und/oder Erdalkalisalze der Benzoesäure sowie Ammoniumbenzoat genannt. Als Alkalisalze seien genannt: Lithium, Natrium, Kalium und Caesium-benzoate. Besonders bevorzugt sind Natrium und/oder Kaliumbenzoate. Als Erdalkalisalze seinen genannt Calcium, Strontium und Magnesiumbenzoate, besonders bevorzugt sind Calcium- und Magnesiumbenzoate.

Als Ester der Benzoesäure bzw. Benzoesäurederivate seien die Ester der Benzoesäure bzw. Benzoesäurederivate mit Alkoholen genannt. Als Alkohole sind sowohl monofunktionelle als auch bifunktionelle sowie polyfunktionelle (mehr als 2 Hydroxylgruppen) geeignet. Als Alkohole sind sowohl lineare als auch verzweigte Alkohole geeignet Besonders geeignet sind Alkohole mit 1 bis 10 C-Atomen, insbesondere mit 1 bis 6 C-Atomen. Exemplarisch seien genannt: Methanol, Ethanol, n-Propanol, Isopropanol, n-Butylalkohol, i-Butylalkohol. Bevorzugt sind Methanol, Ethanol, n-Propanol und Isopropanol. Geeignete Ester der Benzoesäure bzw. Benzoesäurederivate sind weiterhin Ester mit Alkoholen mit mehr als einer Hydroxylgruppe, wie beispielsweise Glykole, exemplarisch sei 1,2 Propandiol genannt oder Triole, wie beispielsweise Glycerol.

Bevorzugt sind Methylbenzoat, Ethylbenzoat, n-Propylbenzoat und Isopropylbenzoat sowie Ethyl-p-Hydroxybenzoat, Natriummethyl-p-hydroxybenzoat, Propyl-p-hydroxybenzoat, Natriumpropyl-p-hydroxybenzoat, Methyl-p-hydroxybenzoat und Natriummethyl-p-hydroxybenzoat.

Derivate der Benzoesäure sind Verbindungen, welche am aromatischen Ring eine, zwei, drei, vier oder fünf Substituenten tragen.
Zu den Substituenten der erfindungsgemäßen Carbonsäuren sind beispielsweise zu zählen C₁-C₈-Alkyl-, C₂-C₈-Alkenyl-, Aryl-, Aralkyl- und Aralkenyl-, Hydroxymethyl-, C₂-C₈-Hydroxyalkyl, C₂-C₈-Hydroxyalkenyl-, Aminomethyl,-, C₂-C₈-Aminoalkyl, Cyano-, Formyl-, Oxo-, Thioxo-, Hydroxy-, Mercapto-, Amino-, Carboxy- oder Iminiogruppen. Bevorzugte Substitutenten sind C₁-C₈-Alkyl-, Hydroxymethyl-, Hydroxy-, Amino- und Carboxygruppen.

Bevorzugte Benzoesäurederivate sind mono-, di- und trihydroxysubstituierte Benzoesäuren.
Beispielsweise seien genannt m-Hydroxybenzoesäure, o-Hydroxybenzoesäure und p-Hydroxybenzoesäure.

Beispielsweise seien genannt 2,4-Dihydroxybenzoesäure, 2,5-Dihydroxybenzoesäure, 2,5-Dihydroxybenzoesäure, 2,6-Dihydroxxybenzoesäure, 3,5-Dihydroxybenzoesäure, 3,6-Dihydroxybenzoesäure, 2,4,6-Trihydroxybenzoesäure.

Besonders bevorzugt sind monohydroxysubstituierte Benzoesäuren, insbesondere p-Hydroxybenzoesäure.

In einer weiteren Ausführungsform können die genannten Benzoate in Mischung untereinander eingesetzt werden.

Bevorzugte Beschichtungsmittel umfassen hydrierte pflanzliche Öle einschließlich Triglyceride, wie z.B. hydrierte Baumwollsamen-, Mais-, Erdnuss-, Sojabohnen-, Palm-, Palmkern-, Babassu-, Sonnenblumen- und Färberdistelöle. Bevorzugte hydrierte pflanzliche Öle umfassen hydriertes Palmöl, Baumwollsamenöl und Sojabohnenöl. Das am meisten bevorzugte hydrierte pflanzliche Öl ist hydriertes Sojabohnenöl.

Die folgende Tabelle enthält besonders geeignete Beschichtungsmaterialien

| **Bezeichnung** | **Zusammensetzung** | **Schmelzbereich** | **CAS-NR./INCI** |
|---|---|---|---|
| Cutina CP von Cognis | synthetisches Cetylpalmitat | 46-51°C | 95912-87-1 Cetyl Palmitate |
| Edenor NHTI-G von Cognis | Triglycerid | 56 - 60°C | 67701-27-3* |
| Edenor NHTI-V von Cognis | Triglycerid 57 - | 60°C | 67701-27-3* EINECS 266-945-8 |
| Japanwachsersatz Kahl - Wachsraffinerie | komplexes Gemisch aus Wachsestern, hauptsächlich Palmitinsäureglycerin-ester | 49 - 55°C | rhus succedanea |
| | | | |
| Vegeol PR-267 von | 25% Colzawar 46, 75% Rucawar FH | 70°C | |
| AARHUS OLIE | 80% Shoguwar FH, 20% Shoguwar 41 | 67°C | |
| Vegeol PR-273 von | 85% Shoguwar FH, 15% Shoguwar 41 | 67°C | |
| Vegeol PR-274 von AARHUS OLIE | 90% Shoguwar FH, 10% Shoguwar 41 | 67°C | |
| Vegeol PR-275 von AARHUS OLIE | 95% Shoguwar FH, 5% Shoguwar 41 | 67°C | |
| Vegeol PR-276 von AARHUS OLIE | 80% Soyalu FH, 20% Soyalu 41 re-esterified | 65°C | |
| Vegeol PR-277 von AARHUS OLIE | 85% Soyalu FH, 15% Soyalu 41 re-esterified | 65°C | |
| Vegeol PR-278 von AARHUS OLIE | 90% Soyalu FH, 10% Soyalu 41 re-esterified | 66°C | |
| Vegeol PR-279 von AARHUS OLIE | 95% Soyalu FH, 5% Soyalu 41 re-esterified | 67°C | |
| Tefacid von Karlshamns | palm kernel oil Tefacid Palmic 90 | 65°C | 57-10-3 |

Die Beschichtungsmittel können sowohl einzeln als auch in Mischungen untereinander eingesetzt werden. In einer Ausführungsform der Erfindung werden dem oder den Beschichtungsmitteln Talkum und/oder Aluminiumsilikate wie z.B. Zeolithe, Feldspäte oder Feldspatvertreter zugefügt. Talkum = Mg₃(OH)₂/Si₄O₁₀ auch Speckstein genannt.

Für die Beschichtung kann z.B. eine möglichst hochkonzentrierte, noch sprühfähige Flüssigkeit, wie z. B. eine bis 50 gew.-%ige wässrige oder nichtwässrige Lösung oder Dispersion eines oder mehrerer der genannten Beschichtungsmaterialien eingesetzt werden. Ebenso könne pulverförmige Beschichtungsmaterialien eingesetzt werden.

In einer weiteren Ausführungsform können die erfindungsgemäßen beschichteten Zubereitungen neben den Hydroformiaten weitere Bestandteile enthalten. Die Wahl der weiteren Bestandteile richtet sich dabei nach dem gewählten Einsatzgebiet der so erhältlichen Zubereitungen. Als weitere Bestandteile im Sinne der vorliegenden Erfindung werden beispielsweise folgende Stoffe genannt: Organischen Säuren, Vitamine, Carotinoide, Spurenelementen, Antioxidantien, Enzyme, Aminosäuren, Mineralstoffen , Emulgatoren, Stabilisatoren, Konservierungsmittel, Bindemittel, Antibackmittel und/oder Geschmacksstoffe.

In einer bevorzugten Ausführungsform können die erfindungsgemäßen beschichteten Zubereitungen weiterhin enthalten mindestens eine kurzkettige Carbonsäure und/oder mindestens ein Salz der kurzkettigen Carbonsäure und/oder mindestens ein Ester der kurzkettigen Carbonsäure und/oder mindestens ein Derivat der kurzkettigen Carbonsäure.

Unter kurzkettigen Carbonsäuren im Sinne der Erfindung werden Carbonsäuren verstanden, welche gesättigt oder ungesättigt und/oder geradkettig oder verzweigt oder cyclisch und/oder aromatisch und/oder heterocyclisch sein können. Unter "kurzkettig" im Sinne der Erfindung werden Carbonsäuren verstanden, die bis zu 12 C-Atome enthalten, insbesondere bis zu 10 C-Atome, insbesondere bis zu 8 C-Atome.

Die kurzkettigen Carbonsäuren weisen üblicherweise ein Molekulargewicht kleiner 750 auf. Die kurzkettigen Carbonsäuren im Sinne der Erfindung können ein, zwei, drei oder mehr Carboxygruppen aufweisen. Die Carboxygruppen können ganz oder teilweise als Ester, Säureanhydrid, Lacton, Amid, Imidsäure, Lactam, Lactim, Dicarboximid, Carbohydrazid, Hydrazon, Hydrocam, Hydroxim, Amidin, Amidoxim oder Nitril vorliegen.

Derivate der kurzkettigen Carbonsäuren sind Carbonsäuren, welche entlang der Kohlenstoffkette oder des Ringgerüsts einfach, zweifach, dreifach oder mehrfach substituiert sind.

Zu den Substituenten der erfindungsgemäßen Carbonsäuren sind beispielsweise zu zählen C1-C8-Alkyl-, C2-C8-Alkenyl-, Aryl-, Aralkyl- und Aralkenyl-, Hydroxymethyl-, C2-C8-Hydroxyalkyl, C2-C8-Hydroxyalkenyl-, Aminomethyl-, C2-C8-Aminoalkyl-, Cyano-, Formyl-, Oxo-, Thioxo-, Hydroxy-, Mercapto-, Amino, Carboxy- oder Iminogruppen. Bevorzugte Substituenten sind C1-C8-Alkyl-, Hydroxymethyl-, Hydroxy-, Amino- und Carboxygruppen.

Als Beispiele für erfindungsgemäße kurzkettige Carbonsäuren seien genannt Ameisensäure, Essigsäure, Propionsäure, Buttersäure, Milchsäure, Zitronensäure, Isobuttersäure, Valeriansäure, Isovaleriansäure, Pivalinsäure, Oxalsäure, Malonsäure, Salicylsäure, Weinsäure, Bernsteinsäure, Glutarsäure, Glycerinsäure, Glyoxylsäure, Adipinsäure, Pimelinsäure, Korksäure, Azelainsäure, Sebacinsäure, Propiolsäure, Crotonsäure, Isocrotonsäure, Elaidinsäure, Maleinsäure, Fumarsäure, Muconsäure, Citraconsäure, Mesaconsäure, Camphersäure, o.m.p.-Phthalsäure, Naphthoesäure, Toluoylsäure, Hydratropasäure, Atropasäure, Zimtsäure, Isonicotinsäure, Nicotinsäure, Bicarbaminsäure, 4,4'-Dicyano-6,6'-binicotinsäure, 8-Carbamoyloctansäure, 1,2,4-Pentantricarbonsäure, 2-Pyrrolcarbonsäure, 1,2,4,6,7-Naphthalinpentaessigsäure, Malonaldehydsäure, 4-Hydroxy-phthalamidsäure, 1-Pyrazolcarbonsäure, Gallussäure oder Propantricarbonsäure.

Als Salze der kurzkettigen Carbonsäuren seinen Alkali- und/oder Erdalkalisalze sowie Ammoniumsalze genannt. Als Alkalisalze seien genannt: Lithium, Natrium, Kalium und Caesium-salze. Besonders bevorzugt sind Natrium und/oder Kaliumsalze. Als Erdalkalisalze seinen genannt Calcium, Strontium und Magnesiumsalze, besonders bevorzugt sind Calcium- und Magnesiumsalze.

Als Ester der kurzkettigen Carbonsäuren seien die Ester mit Alkoholen genannt. Als Alkohole sind sowohl monofunktionelle als auch bifunktionelle sowie polyfunktionelle (mehr als 2 Hydroxylgruppen) geeignet. Als Alkohole sind sowohl lineare als auch verzweigte Alkohole geeignet Besonders geeignet sind Alkohole mit 1 bis 10 C-Atomen, insbesondere mit 1 bis 6 C-Atomen. Exemplarisch seien genannt: Methanol, Ethanol, n-Propanol, Isopropanol, n-Butylalkohol, i-Butylalkohol. Bevorzugt sind Methanol, Ethanol, n-Propanol und Isopropanol. Geeignete Ester sind weiterhin Ester mit Alkoholen mit mehr als einer Hydroxylgruppe, wie beispielsweise Glykole, exemplarisch sei 1,2 Propandiol genannt oder Triole, wie beispielsweise Glycerol.

Bevorzugte Ester sind Methyl-, Ethyl-, n-Propyl- und Isopropyl-Ester.

Besonders bevorzugt ist der Einsatz der Säuren und/oder Salze und/oder Ester von Ameisensäure, Essigsäure, Propionsäure, Fumarsäure, Salicylsäure, Zitronensäure, Milchsäure und/oder Weinsäure.

Ganz besonders bevorzugt ist der Einsatz von Natriumpropionat.

In einer weiteren Ausführungsform können die genannten kurzkettigen Carbonsäuren, Salze und/oder Ester in Mischungen untereinander eingesetzt werden.

In einer weiteren Ausführungsform können die erfindungsgemäßen beschichteten Zubereitungen neben den Hydroformiaten Träger enthalten. In dieser Ausführungsform liegen die Hydroformiate bevorzugt an den Träger gebunden vor. Als Träger eignen sich "inerte" Trägermaterialien, d.h. Materialien die keine negativen Wechselwirkungen mit den in der erfindungsgemäßen Zubereitung eingesetzten Komponenten zeigen. Selbstverständlich muss das Trägermaterial für die jeweilige Verwendungen als Hilfsstoff, z.B. in Tierfuttermitteln, unbedenklich sein. Als Trägermaterialien eigenen sich sowohl anorganische als auch organisch Träger. Als Beispiele für geeignete Trägermaterialien sind zu nennen: niedermolekulare anorganische oder organische Verbindungen sowie höhermolekulare organische Verbindungen natürlichen oder synthetischen Ursprungs. Beispiele für geeignete niedermolekulare anorganische Träger sind Salze, wie Natriumchlorid, Calciumcarbonat, Natriumsulfat und Magnesiumsulfat Kieselgur oder Kieselsäure bzw. Kieselsäurederivate, wie z.B. Siliziumdioxide, Silicate oder Kieselgele. Beispiele für geeignete organische Träger sind insbesondere Zucker, wie z. B. Glucose, Fructose, Saccharose sowie Dextrine und Stärkeprodukte. Als Beispiele für höhermolekulare organische Träger sind zu nennen: Stärke- und Cellulosepräparate, wie insbesondere Maisstärke, Maisspindelmehl, gemahlene Reishüllen, Weizengrieskleie oder Getreidemehle, wie z. B. Weizen-, Roggen-, Gersten- und Hafermehl oder -kleie oder Gemische davon.

In einer weiteren Ausführungsform können die erfindungsgemäßen beschichteten Zubereitungen neben den Hydroformiaten Zuschlagstoffe enthalten. Unter "Zuschlagstoffen" werden Stoffe verstanden, die der Verbesserung der Produkteigenschaften, wie Staubverhalten, Fließeigenschaften, Wasseraufnahmefähigkeit und Lagerstabilität dienen. Zuschlagstoffe und/oder Mischungen davon können auf der Basis von Zuckern z.B. Lactose oder Maltodextrin, auf der Basis von Getreide- oder Hülsenfruchtprodukten z.B. Maisspindelmehl, Weizenkleie und Sojaschrot, auf der Basis von Mineralsalzen u.a. Calcium-, Magnesium-, Natrium-, Kaliumsalze, sowie auch D-Pantothensäure oder deren Salze selbst (chemisch oder fermentativ hergestelltes D-Pantothensäuresalz) sein.

Die erfindungsgemäßen beschichteten Zubereitungen können die weiteren Bestandteile, Träger und Zuschlagsstoffe in Mischungen enthalten.

Die erfindungsgemäßen beschichteten Zubereitungen liegen üblicherweise in fester Form, wie.z.B. Pulver, Agglomerat, Adsorbat, Granulat und/oder Extrudat vor. Die Pulver weisen üblicherweise eine mittlere Partikelgröße von 1 µm bis 10000 µm, insbesondere 20 µm bis 5000 µm auf.

Die mittlere Partikelgrößenverteilung wird wie folgt bestimmt:

Die pulverförmigen Produkte werden auf einem Gerät der Firma Malvern Instruments GmbH, Mastersizer S., Serial Number: 32734-08, untersucht. Zur Beschreibung der Breite der Partikelgrößenverteilung werden für die Pulver die Werte D(v,0.1), D(v,0.5) und D(v,0.9) bestimmt sowie die mittlere Partikelgröße der Vereilung D[4,3] angegeben.

### Verfahren zur Herstellung

Zur Herstellung der erfindungsgemäßen beschichteten Zubereitungen sind alle Verfahren geeignet, bei denen man Zubereitungen erhält, deren Oberfläche zumindest zu 50 % insbesondere mindestens 70, ganz besonders bevorzugt mindestens 80, insbesondere mindestens 90 % bedeckt ist.

Ein Gegenstand der vorliegenden Erfindung betrifft eine Verfahren zur Herstellung der erfindungsgemäßen beschichteten Zubereitungen, bei dem man die Hydroformiate durch Desublimation des Beschichtungsmittels beschichtet.

Bei diesem Verfahren wird das Beschichtungsmittel sublimiert und auf den zu beschichtenden Zubereitungen desublimiert, d.h. niedergeschlagen. Solche Verfahren sind aus der Literatur bekannt als Sublimations- oder Desublimationsverfahren. Das erfindungsgemäße Verfahren ermöglicht es das Beschichtungsmittel homogen und in gewünschten Schichtdicken aufzutragen. Das Verfahren der Sublimation und Desublimation ist beschrieben in Ullmann's Encyclopedia of industrial Chemistry, Sixth Edition, 2000 Electronic Release, Kapitel 4.1. Geeignete Verdampfer (Sublimatoren) sind solche wie in Ullmanns a.o.o Kapitel 5.1 beschrieben, Kondensatoren (Desublimatoren) wie in Kapitel 5.2 beschrieben, Apparateausführungen und Verschaltungen sind in den Abbildungen 5,6,7, 9 und 10 beschrieben auf die hier ausdrücklich Bezug genommen wird. Als weiterer möglicher Kondensator sei die Wirbelschicht genannt.

In einer bevorzugten Ausführungsform wird bei diesem Verfahren als Beschichtungsmittel mindestens eine Verbindung aus der Stoffklasse b) eingesetzt.

Ein Gegenstand der vorliegenden Erfindung betrifft ein Verfahren zur Herstellung von beschichteten Zubereitungen enthaltend Hydroformiate bei dem man die Hydroformiate, gegebenenfalls zusammen mit weiteren Bestandteilen und/oder Zuschlagstoffen in einem geeigneten Apparat vorlegt und mit einem Beschichtungsmittel, gegebenenfalls unter Zugabe weiterer Bestandteile, beschichtet.

Als geeignete Apparate seien exemplarisch genannt: Mischer, Wirbelschicht, Dragiertrommeln und Trommelcoater.

Die vorteilhafterweise pulverförmig vorliegenden Hydroformiate (z.B. in kristalliner, amorpher Form, in Form von Adsorbaten, Extrudaten, Granulaten und oder Agglomeraten) werden hierbei in dem geeigneten Apparat, bevorzugt in einer Wirbelschicht oder einem Mischer vorgelegt. Die Hydroformiate werden, ggf. zusammen mit sogenannten Zuschlagstoffen und weiteren Bestandteilen vorgelegt. Pflugscharen, Schaufeln, Messerköpfe, Knetelemente, Koller, Schnecken oder ähnliches sorgen für eine mehr oder minder intensive Produktdurchmischung. Klassische Beispiele sind Intensivmischer, Pflugscharmischer, Konusschneckenmischer oder ähnliche Apparate.

Auch sehr flache, kasten- oder trogförmige Bauformen mit einer oder mehreren Schnecken sind einsetzbar. Weitere Bauformen sind schnelllaufende Mischer wie z.B. der Turbolizer® Mixer/Coater von Hosokawa Micron B.V., Kneter, Kollergänge sowie alle Arten von Trommelcoatern oder Dragiertrommeln.

Alternativ ist die Produktdurchmischung über eine Bewegung des gesamten Behälters in sogenannten Freifallmischern möglich. Beispiele hierfür sind Beschichtungsteller, Taumelmischer, V-Mischer, Trommelmischer oder ähnliches. Eine weitere Möglichkeit besteht in der Verwendung von pneumatischen Mischern. Die Mischung von Feststoffen ist beispielsweise in Ullmann's Encyclopedia of Industrial Chemistry, Sixth Edition, 2000, Mixing of Solids beschrieben.

Die Beschichtung kann entweder direkt in dem Apparat nachgeschaltet durchgeführt werden.

Das genannte Verfahren kann sowohl kontinuierlich als auch diskontinuierlich durchgeführt werden (in entsprechend diskontinuierlich oder kontinuierlich arbeitenden Mischern)

In Einzelfällen kann es erforderlich sein, beim Aufbringen des Beschichtungsmittels oder unmittelbar danach/davor Puderungsmittel wie Talkum, Silikate oder ähnliches zum Vermeiden von Verklebungen zuzugeben.

Die Dosierung/Zugabe des Beschichtungsmittels erfolgt ggf. zusammen mit weiteren Bestandteilen üblicherweise über Einrichtungen zum Auftropfen oder Aufdüsen. Beispiele hierfür sind Lanzen, Brauseköpfe, Einstoff- oder Mehrstoffdüsen, in seltenen Fällen rotierende Tropf- oder Zerstäubungseinrichtungen. Im einfachsten Fall ist die Zugabe auch lokal als konzentrierter Strahl möglich.

Ein Gegenstand der vorliegenden Erfindung betrifft ein Verfahren zur Herstellung von beschichteten Zubereitungen enthaltend Hydroformiate bei dem man Beschichtungsmittel, gegebenenfalls unter Zugabe weiterer Bestandteile in einem geeigneten Apparat vorlegt und Hydroformiate, gegebenenfalls zusammen mit weiteren Bestandteilen und/oder Zuschlagstoffen, zugibt.

In einer Ausführungsform dieses Verfahrens wird das zunächst feste Beschichtungsmittel in einen geeigneten Apparat gegeben und infolge einer Wandbeheizung des Apparats oder der Welle oder infolge des mechanischen Energieeintrags geschmolzen oder erweicht. Die Hydroformiate und gegebenenfalls weiteren Bestandteile und/oder Zuschlagsstoffe werden zugegeben und mit dem geschmolzenen oder erweichten Beschichtungsmittel überzogen.

In einer Ausführungsform dieses Verfahren werden zusätzlich zum werden Beschichtungsmittel Träger im Mischer vorgelegt und ggf. vorgemischt und infolge hohem mechanischem Energieeintrags im selben oder in separaten Apparaten (Beispiele sind alle bereits genannten Mischer aber auch langsamlaufende Mühlen und Trockner) werden die Hydroformiaten sowie gegebenenfalls weiteren Bestandteilen und/oder Zuschlagstoffen beschichtet.

Die Zugabe der Beschichtungsmittel kann bei Überdruck, Normaldruck oder bei Unterdruck gegen Atmosphäre, vorzugsweise bei Normaldruck und Unterdruck erfolgen.

In einzelnen Fällen kann es vorteilhaft sein, die Hydroformiate sowie gegebenenfalls weitere Bestandteile und/oder Zuschlagsstoffe und/oder das Beschichtungsmittel vorzuheizen oder zu kühlen (Veränderung von Viskosität, Veränderung der Benetzungseigenschaften, Beeinflussung der Erstarrungseigenschaften) sowie Wärme über die Behälterwand und/oder die Mischwerkzeuge zuzuführen oder zu entziehen. In einzelnen Fällen kann es erforderlich sein, Wasser- oder Lösungsmitteldämpfe abzuführen. Eine Veränderung der Benetzungseigenschaften kann auch durch Zugabe oberflächenaktiver Substanzen wie Emulgatoren oder ähnliches erreicht werden.

Zur Verbesserung der Beschichtungseigenschaften kann es vorteilhaft sein, den Mischer zu evakuieren sowie ggfls mit Schutzgas zu überdecken. In Abhängigkeit vom Beschichtungsmaterial ist dies mehrfach zu wiederholen.

Die Zugabe der Hydroformiate, gglfs. weiterer Bestandteile und/oder Zuschlagsstoffen sowie der Beschichtungsmittel kann bei Bedarf an unterschiedlichen Orten im Apparat erfolgen.

Der Zugabeort für Beschichtungsmittel oder Zuschlagstoffe wird entsprechend der Anforderungen variiert und vom Fachmann ausgewählt. Die oben beschriebenen Einrichtungen zum Auftropfen oder Aufdüsen sind je nach Bedarf über der Produktschicht (Topsprayverfahren) angeordnet oder in die Produktschicht eingetaucht (von der Seite über Apparatewände, durch Kanäle in den Mischwerkzeugen oder von unten über Apparate- oder Wirbelböden) angeordnet.

Ein Gegenstand der vorliegenden Erfindung betrifft ein Verfahren zur Herstellung von beschichteten Zubereitungen enthaltend Hydroformiate bei dem man die Hydroformiate, (gegebenenfalls zusammen mit weiteren Bestandteilen und/oder Zuschlagstoffen) und dem Beschichtungsmittel in einem geeigneten Apparat mischt, anschließend in einem Extrusionsverfahren verstrangt und danach durch Brechen und/oder Verrunden in Granulate überführt.

In einer weiteren Ausführungsform wird nach dem Mischen eine Pressagglomeration mit ggf. nachgeschalteter Zerkleinerung und Fraktionierung zur Granulation genutzt (z.B. Tablettierung oder Walzenkompaktierung).

In einer weiteren Ausführungsform der vorliegenden Erfindung erfolgt die Herstellung der erfindungsgemäß beschichteten Zubereitungen diskontinuierlich oder kontinuierlich in Wirbelschichten erfolgen. Die Bewegung der Partikeln erfolgt durch das gegebenenfalls heiße oder gekühlte Wirbelgas. Als Wirbelgas sind z.B. Luft oder auch Inertgas (z.B. Stickstoff) geeignet. In Einzelfällen kann es sinnvoll sein, über die Behälterwand sowie über in die Wirbelschicht eingetauchte Wärmetauscherflächen Wärme zuzuführen oder zu entziehen. Geeignete Wirbelschichten sowie die erforderliche Peripherie sind Stand der Technik.

Die diskontinuierliche oder kontinuierliche Dosierung und gegebenenfalls die Vorheizung der Hydroformiate, gegebenenfalls der weiteren Bestandteile und Zuschlagstoffe erfolgt durch oben beschriebenen Einrichtungen, die dem Fachmann bekannt sind.

Beispielsweise können die Hydroformiate in einem Wirbelbett vorgelegt werden. Diese werden verwirbelt und durch Aufsprühen einer wässrigen oder nichtwässrigen Lösung oder Dispersion oder einer Schmelze eines geeigneten Beschichtungsmittels beschichtet.

Hilfreich sind nach dem Stand der Technik bekannte Einbauten, welche eine gezielte Durchmischung des zu beschichtenden Feststoffs unterstützen. Beispiele hierfür sind drehende Verdrängungskörper, Wursterrohre aber auch speziell gefertigte Wirbelbodengeometrien (Neigung und/oder Perforierung des Bodens) oder die Unterstützung der gezielten Feststoffbewegung durch sinnvoll angeordnete Düsen, z.B. tangential angeordnete Einstoff- oder Zweistoff oder Mehrstoffdüsen.

Die Herstellung von beschichteten Zubereitungen, enthaltend Hydroformiate kann in Einzelfällen vorteilhaft in Kombination von Mischer und Wirbelschicht erfolgen.

Ein Gegenstand der vorliegenden Erfindung betrifft ein Verfahren zur Herstellung von beschichteten Zubereitungen enthaltend Hydroformiate bei dem Hydroformiate, gegebenenfalls zusammen mit weiteren Bestandteilen und/oder Zuschlagstoffen in Schmelzen geeigneter Beschichtungsmittel dispergiert und anschließend die so erhaltenen Dispersionen zerteilt und erstarrt.

In einer Ausführungsform dieses Verfahren können die Hydroformiate, gegebenenfalls zusammen mit weiteren Bestandteilen und/oder Zuschlagstoffen in Form einer Schmelze eingesetzt werden.

In einer weiteren Ausführungsform werden die erfindungsgemäßen beschichteten Zubereitungen erhalten, indem man die Hydroformiate (und gegebenenfalls die weiteren Bestandteile und/oder Zuschlagsstoffe) in Schmelzen geeigneter Beschichtungsmittel suspendiert und anschließend die so erhaltenen Dispersionen zerstäubt und/oder zerteilt und erstarren lässt. Geeignete Beschichtungsmittel in Form von Schmelzen sind Stoffe deren Schmelzpunkt kleiner ist als der Schmelzpunkt der zu suspendierenden Hydroformiate. Beispielsweise seien genannt Fette, Wachse, Öle, Lipide, lipidartige und lipidlösliche Substanzen mit entsprechenden Schmelzpunkten.

Diese Suspensionen werden anschließend in einem Kaltgasstrom - mit und ohne Verwendung von Bepuderungsmitteln - zerstäubt, so dass beschichtete Zubereitungen, enthaltend Hydroformiate, entstehen. Diese Verfahren sind dem Fachmann beispielsweise unter den Begriffen Sprühkühlung, Sprüherstarrung, Prillen oder Schmelzeverkapselung sowie Erstarren auf Kühlbändern, - walzen, Pastilliertellern und -bändern bekannt.

Bevorzugt werden die Schmelzen in einem ersten Schritt hergestellt, bevor die Hydroformiate zugegeben und suspendiert werden. Das Suspendieren kann batchweise im Rührkessel oder auch kontinuierlich in z.B. dafür geeigneten Pumpen oder infolge ausreichend hoher Turbulenz einfach in Injektoren und Rohrleitungen erfolgen. Möglich ist auch der Einsatz statischer Mischer. Die Schutzbeheizung der erforderlichen Anlagenteile - einschließlich der Leitungen und Zerstäubungsorgane - ist dem Fachmann bekannt.

Als Kühlgas kommen bevorzugt Luft und Stickstoff in Frage. Die Gasführung kann im Gleich-, Gegen- oder Kreuzstrom erfolgen. Das Verfahren kann in klassischen Sprüh-, Prilltürmen oder sonstigen Behältern durchgeführt werden. Wirbelschichten mit und ohne Hold-up sind ebenfalls geeignet. Das Verfahren kann diskontinuierlich oder kontinuierlich betrieben werden. Die Abtrennung des Feststoffs ist z.B. in Zyklonen oder Filtern möglich. Alternativ ist das Auffangen des Feststoffs mit und ohne Nachkühlung in Wirbelschichten oder Mischern denkbar.

Als Zerstäubungsorgane sind Düsen (Ein- und Zweistoffdüsen oder Sonderbauformen) sowie Zerstäuberräder oder Zerstäuberscheiben oder -teller oder Zerstäuberkörbe - oder Sonderbauformen hiervon - geeignet.

In einer weiteren Ausführungsform zerstäubt und erstarrt man die so erhältlichen Dispersionen in Flüssigkeiten, in denen weder die Hydroformiate noch die Beschichtungsmittel löslich sind. Eine klassische Festflüssigtrennung mit anschließender Trocknung führen zur erfindungsgemäßen Zubereitung.

Ein weiterer Gegenstand der vorliegenden Erfindung betrifft ein Verfahren zur Herstellung von beschichteten Zubereitungen enthaltend Hydroformiate, bei dem man Hydroformiate, ggl. weiterer Bestandteile und/oder Zuschlagsstoffen in einem Beschichtungsmittel, insbesondere einem lipophilen Beschichtungsmittel dispergiert, in einer wässrigen Lösung eines Schutzkolloids, vorzugsweise Gelatine oder/und Gelatinederivate oder/und Gelatineersatzstoffe unter Zusatz eines oder mehrerer Stoffe aus der Gruppe der Mono-, Di- der Polysaccharide emulgiert und anschließend einer Sprühtrocknung unterwirft.

Bei diesem Verfahren werden bevorzugt sehr feinkörnige Hydroformiaten eingesetzt, die beispielsweise durch Fällung, Kristallisation, Sprühtrocknung oder Mahlung erhalten werden.

In einer Ausführungsform können den Hydroformiaten vor der Dispergierung in der lipophilen Komponente ein oder mehrere Emulgatoren und/oder Stabilisatoren zugegeben werden.

Als lipophile Beschichtungsmittel eignen sich Schmelzen aus Fetten, Ölen, Wachsen, Lipiden, lipidartigen und -lipidlöslichen Stoffen mit einem Schmelzpunkt der kleiner ist als der Schmelzpunkt der eingesetzten Hydroformiate.

Die so erhaltenden Dispersionen (die Hydroformiate enthaltende Öltröpfchen) werden in einem anschließenden Verfahrensschritt in einer wässrige Lösung eines Schutzkolloids, vorzugsweise Gelatine oder/und Gelatinederivate oder/und Gelatineersatzstoffe unter Zusatz eines oder mehrerer Stoffe aus der Gruppe der Mono-, Di- der Polysaccaride vorzugsweise Maisstärke emulgiert. Die so erhaltenen Emulsionen werden einer Formgebung durch Sprühung und anschließender oder gleichzeitiger Trocknung unterworfen.

In einer weiteren Ausführungsform enthalten die erfindungsgemäß beschichteten Zubereitungen die Hydroformiate an einen Träger gebunden.

Die Herstellung der Träger gebundenen Zubereitungen erfolgt nach dem Fachmann bekannten Herstellungsverfahren, wie z.B. durch Adsorption der erfindungsgemäßen Zubereitungen in flüssiger Form an die Trägersubstanzen.

### Anwendung

Die erfindungsgemäßen beschichteten Zubereitungen eignen sich zur Verwendung in Futtermitteln für Tiere (Tierfuttermittel). Beispielsweise seien genannt: Schweine, Wiederkäuer, Geflügel und andere Haus- und Nutztiere. Die erfindungsgemäßen Zubereitungen eignen sich insbesondere für Mastgeflügel (Broiler, Puten, Gänse), sowie für Mastschweine.

Die erfindungsgemäßen beschichteten Zubereitungen eignen sich insbesondere als Zusatz zu Tierfuttermitteln in Form von Futtermittelzusatzstoffen.

Futtermittelzusatzstoffe sind gemäß Futtermittelgesetz insbesondere solche Stoffe, die einzeln oder in Form von Zubereitungen dazu bestimmt sind, Futtermitteln zugesetzt zu werden, um
- die Beschaffenheit der Futtermittel oder der tierischen Erzeugnisse zu beeinflussen,
- den Bedarf der Tiere an bestimmten Nähr- oder Wirkstoffen zu decken oder die tierische Erzeugung zu verbessern, insbesondere durch Einwirkung auf die Magen- und Darmflora oder die Verdaulichkeit der Futtermittel oder durch Verringerung von Belästigungen durch Ausscheidungen der Tiere, oder
- besondere Ernährungszwecke zu erreichen oder bestimmte zeitweilige ernährungsphysiologische Bedürfnisse der Tiere zu decken.

Als Futtermittelzusatzstoffe gelten weiterhin Stoffe, die durch Rechtsverordnung nach § 4 Abs. 1 Nr. 3 Buchstabe b des Futtermittelgesetzes als Zusatzstoffe zugelassen sind.

Die erfindungsgemäßen beschichteten Zubereitungen eignen sich insbesondere als Zusatz zu Prämixen für Tierfuttermittel. Prämixe sind Mischungen von Mineralstoffen, Vitaminen, Aminosäuren, Spurenelementen sowie ggfls. Enzymen. Mit den erfindungsgemäßen Zubereitungen ist es möglich Prämixe, enthaltend Hydroformiate herzustellen.

Ein weiterer Gegenstand der vorliegenden Erfindung betrifft ein Verfahren zur Herstellung eines Hydroformiat enthaltenden Futtermittels und/oder Futtermittelzusatzstoffes, dadurch gekennzeichnet, dass man
(i) eine beschichtete Zubereitung enthaltend Hydroformiate zu einem Prämix gibt
(ii) den so erhaltenen Prämix mit den übrigen Inhaltsstoffen des Futtermittels und/oder Futtermittelzusatzstoffes mischt.

Die erfindungsgemäßen beschichteten Zubereitungen eignen sich insbesondere als sogenannte "Acidifier". Unter Acidifier werden solche Stoffe verstanden, die den pH-Wert absenken. Dabei sind sowohl solche Stoffe umfasst, die den pH-Wert im Substrat (z.B. Tierfutter) absenken als auch solche die den pH-Wert im Magen-Darm Trakt des Tier absenken.

Die erfindungsgemäßen beschichteten Zubereitungen eignen sich insbesondere als Leistungsförderer. In einer bevorzugten Ausführungsform werden die erfindungsgemäßen Zubereitungen als Leistungsförderer für Schweine und Geflügel eingesetzt.

Die erfindungsgemäßen beschichteten Zubereitungen eignen sich insbesondere als Futtermittelzusatzstoffe die den pH-Wert im Magen-Darm Trakt des Tieres absenken und dadurch zur Stabilisierung einer vorteilhaften intestinalen Mikroflora beitragen. Des weiteren kann durch das Dissoziationsvermögen der erfindungsgemäßen beschichteten Zubereitungen ein antimikrobieller Effekt insbesondere auf unerwünschte Bakterien (beispielsweise *E. Coli*) erfolgen. In einer bevorzugten Ausführungsform werden die erfindungsgemäßen beschichteten Zubereitungen derart eingesetzt, dass der pH-Wert über den Magen hinaus, noch im Bereich des weiteren Verdauungstraktes, reduziert wird. Dies ist insbesondere vorteilhaft bei Geflügel.

Tierfuttermittel werden so zusammengesetzt, dass der entsprechende Bedarf an Nährstoffen für die jeweilige Tierart optimal gedeckt wird. Im allgemeinen werden pflanzliche Futtermittelkomponenten wie Mais-, Weizen- oder Gerstenschrot, Sojavollbohnenschrot, Sojaextraktionsschrot, Leinextraktionsschrot, Rapsextraktionsschrot, Grünmehl oder Erbsenschrot als Rohproteinquellen gewählt. Um einen entsprechenden Energiegehalt des Futtermittels zu gewährleisten, werden Sojaöl oder andere tierische oder pflanzliche Fette zugegeben. Da die pflanzlichen Proteinquellen einige essentielle Aminosäuren nur in unzureichender Menge beinhalten, werden Futtermittel häufig mit Aminosäuren angereichert. Hierbei handelt es sich vor allem um Lysin und Methionin. Um die Mineralstoff- und Vitaminversorgung der Nutztiere zu gewährleisten, werden außerdem Mineralstoffe und Vitamine zugesetzt. Die Art und Menge der zugesetzten Mineralstoffe und Vitamine hängt von der Tierspezies ab und ist dem Fachmann bekannt (s. z.B. Jeroch et al., Ernährung landwirtschaftlicher Nutztiere, Ulmer, UTB). Zur Deckung des Nährstoff- und Energiebedarfs können Alleinfutter verwendet werden, die alle Nährstoffe im bedarfsdeckenden Verhältnis zueinander enthalten. Es kann das einzige Futter der Tiere bilden. Alternativ kann zu einem Körnerfutter aus Getreide ein Ergänzungsfutter gegeben werden. Hierbei handelt es sich um eiweiß-, mineralstoff- und vitaminreiche Futtermischungen, die das Körnerfutter sinnvoll ergänzen.

Die erfindungsgemäßen beschichteten Zubereitungen eignen sich weiterhin als Konservierungsmittel, insbesondere als Konservierungsmittel für Grünfutter und/oder Tierfutter.

Es wurde gefunden, dass die erfindungsgemäßen beschichteten Zubereitungen vorteilhafterweise bei der Herstellung von Silage eingesetzt werden können. Sie beschleunigen die Milchsäuregärung bzw. Verhindern ein Nachgären. Ein weiterer Gegenstand der Erfindung betrifft daher die Verwendung der erfindungsgemäßen beschichteten Zubereitungen als Silierungsmittel (Silierhilfsmittel).

Ein weiterer Gegenstand der vorliegenden Erfindung betrifft die Verwendung der erfindungsgemäßen beschichteten Zubereitungen in Düngemitteln.

### Beispiel 1: Herstellung von beschichteten Zubereitungen

### Schmelzagglomeration im Intensivmischer R02, Fa. Eirich

1000 kg Trinatriumhydrogenformiat wurden im Mischer vorgelegt und über die elektrische Begleitheizung bei rotierendem Mischertopf (n = 84 min⁻¹) auf eine Produkttemperatur von 50°C aufgeheizt. 0,290 kg Vegeol PR 273 wurden als Binde-/Coatingmittel nach Vorwärmung auf T = 85°C schmelzflüssig im Vollstrahl mit einer Sprührate von 40 g/min zugegeben. Während der Schmelzezugabe rotierten Mischertopf (n = 84 min⁻¹) und Sternwirbler (n = 900 min⁻¹) gegenläufig. Nach Beendigung der Schmelzezugabe wurde das Produkt über 3 min nachgranuliert, dabei rotierten Mischertopf (n = 84 min⁻¹) und Sternwirbler (n = 900 m⁻¹) gleichläufig. Es stellte sich eine Produkttemperatur von T = 58°C ein. Die Abkühlung auf 35°C erfolgte bei ruhendem Mischer. Danach lagen stabile Agglomerate, aufgebaut aus Primäragglomeraten, separiert vor.
Schüttdichte: 610 kg/m3
Siebanalyse Planschwingsieb:
Massenanteil Feingut (< 0,5 mm): 12,5 %
Massenanteil Grobgut (> 1,4 mm): 24,5 %
Massenanteil Nutzgut: (0,5-1,4mm): 63 %

### Beispiel 2: Fütterungsversuch mit beschichteten Zubereitungen

Ein Fütterungsversuch wurde mit einem Tag alten Hühnern durchgeführt. Trinatriumhydrogenformiat wurde mit 0, 15 und 30 Gew.-% hydriertem Sojabohnenöl beschichtet. Es wurden pro Dosis 2 Widerholungen durchgeführt, pro Fütterungsversuch jeweils 10 Hühner eingesetzt.

Eine Standard Weizen-Soja Nahrung wurde als Negativkontrolle eingesetzt. Die beschichteten Trinatriumhydrogenformiat Zubereitungen wurden der Nahrung im Austausch zu Cellulose zugesetzt (1% in der Negativkontrolle).

Die Verbesserung bei der Gewichtszunahme und der Futterverwertung nach 21 Tage des Fütterungsversuchs sind in folgender Tabelle gezeigt:

**Ergebnisse der Fütterung im Vergleich zur Negativkontrolle [%] nach 21 Tagen**

| Beschichtung [Gew.-%] | 0 | | 15 | | 30 | |
|---|---|---|---|---|---|---|
| Gehalt an Trinatriumhydrogenformiat [Gew.-%] | 0.4 | 0.8 | 0.4 | 0.8 | 0.4 | 0.8 |
| Gewichtszunahme | +2 | +2 | +4 | +4 | +6 | +4 |
| FCR (feed conversion rate) | +2 | +5 | +5 | +1 | +4 | +3 |

### Vergleichsbeispiel 3: Flüssige Zubereitung

40 g Trinatriumhydrogenformiat werden mit 60 g Wasser gemischt. Man erhält eine Lösung, enthaltend
40 Gew.-% Trinatriumhydrogenformiat
60 Gew.-% Wasser.

### Vergleichsbeispiel 4: Flüssige Zubereitung mit Benzoesäure

Zur Lösung nach Beispiel 3 werden 5 g Benzoesäure zugegeben. Dies entspricht einem Anteil von 4,85 Gew.-% bezogen auf die Gesamtlösung.

## Patentansprüche

1. Beschichtete Zubereitung, enthaltend
als Komponente A) mindestens ein Hydroformiat der allgemeinen Formel (I)
(I) M₃[HCOO]₃ · HCOOH
wobei M = Na, K, Cs, NH₄ bedeutet, und
als Komponente B) mindestens ein Beschichtungsmittel, ausgewählt aus der Gruppe bestehend aus
a) gehärtete pflanzliche Öle/Fette, die hydriert oder teilhydriert sind, und
b) Benzoesäure und/oder Salze der Benzoesäure und/oder Ester der Benzoesäure und/oder Derivate der Benzoesäure und/oder Salze der Benzoesäurederivate und/oder Ester der Benzoesäurederivate.

2. Beschichtete Zubereitung nach Anspruch 1, **dadurch gekennzeichnet, dass** als Hydroformiat Trinatriumhydroformiat eingesetzt wird.

3. Beschichtete Zubereitung nach Anspruch 1 oder 2, **dadurch gekennzeichnet, dass** die Zubereitung weitere Bestandteile und/oder Zuschlagstoffe und/oder Träger enthält.

4. Beschichtete Zubereitung nach den Ansprüchen 1 bis 3, **dadurch gekennzeichnet, dass** als Beschichtungsmittel B) hydriertes Palmöl, hydriertes Baumwollsaatöl oder hydriertes Sojabohnenöl eingesetzt wird.

5. Beschichtete Zubereitung nach den Ansprüchen 1 bis 4, **dadurch gekennzeichnet, dass** sie als Pulver mit einer mittleren Partikelgröße von 1 µm bis 10 000 µm, insbesondere 20 µm bis 5000 µm vorliegt.

6. Verfahren zur Herstellung von beschichteten Zubereitungen gemäß den Ansprüchen 1 bis 5 , **dadurch gekennzeichnet, dass** man
(i) die Komponente A) gegebenenfalls unter Zumischung weiterer Bestandteile und/oder Zuschlagstoffe vorlegt und
(ii) die so erhaltene Mischung mit der Komponente B), gegebenenfalls zusammen mit weiteren Bestandteilen, beschichtet.

7. Verfahren zur Herstellung von beschichteten Zubereitungen gemäß den Ansprüchen 1 bis 5, **dadurch gekennzeichnet, dass** man
(i) die Komponente B), gegebenenfalls unter Zugabe weiterer Bestandteile, in einem geeigneten Apparat vorlegt und
(ii) die Komponente A), gegebenenfalls zusammen mit weiteren Bestandteilen und/oder Zuschlagstoffen, zugibt.

8. Verfahren zur Herstellung von beschichteten Zubereitungen nach den Ansprüchen 6 oder 7, **dadurch gekennzeichnet, dass** man die Komponente A) vor der Beschichtung auf ein Trägermaterial aufbringt.

9. Verfahren zur Herstellung von beschichteten Zubereitungen gemäß den Ansprüchen 1 bis 5, **dadurch gekennzeichnet, dass** man
(i) die Komponente A), gegebenenfalls zusammen mit weiteren Bestandteilen und/oder Zuschlagstoffen in Schmelzen der Komponente B) dispergiert und
(ii) die so erhaltenen Dispersionen zerteilt und erstarrt.

10. Verfahren zur Herstellung von beschichteten Zubereitungen gemäß den Ansprüchen 1 bis 5, **dadurch gekennzeichnet, dass** man
(i) die Komponente A) gegebenenfalls zusammen mit weiteren Bestandteilen und/oder Zuschlagsstoffen in der Komponente B dispergiert,
(ii) in einer wässrigen Lösung eines Schutzkolloids, vorzugsweise Gelatine oder/und Gelatinederivate oder/und Gelatineersatzstoffe unter Zusatz eines oder mehrerer Stoffe aus der Gruppe der Mono-, Di- oder Polysaccaride emulgiert und
(iii) einer Formgebung durch Sprühung und anschließender oder gleichzeitiger Trocknung unterwirft.

11. Verfahren zur Herstellung von beschichteten Zubereitungen gemäß den Ansprüchen 1 bis 5, **dadurch gekennzeichnet, dass** man die Komponente A) durch Desublimation der Komponente B) beschichtet.

12. Verwendung einer beschichteten Zubereitung gemäß den Ansprüchen 1 bis 5 in Prämixen für Tierfuttermittel.

13. Verwendung einer beschichteten Zubereitung gemäß den Ansprüchen 1 bis 5 in Futtermittelzusatzstoffen und/oder Tierfuttermitteln, insbesondere für Schweine, Geflügel und Kälber.

14. Verwendung der beschichteten Zubereitungen gemäß den Ansprüchen 1 bis 5 als Leistungsförderer und/oder Wachstumsförderer.

15. Verwendung der beschichteten Zubereitungen gemäß den Ansprüchen 1 bis 5 als Acidifier.

16. Verwendung der beschichteten Zubereitungen gemäß den Ansprüchen 1 bis 5 als Konservierungsmittel.

17. Verwendung der beschichteten Zubereitungen gemäß den Ansprüchen 1 bis 5 als Siliermittel.

18. Verwendung der beschichteten Zubereitungen gemäß den Ansprüchen 1 bis 5 in Düngemitteln.

19. Verfahren zur Herstellung eines Futtermittels und/oder Futtermittelzusatzstoffes, **dadurch gekennzeichnet, dass** man
(i) eine beschichtete Zubereitung gemäß den Ansprüchen 1 bis 5 zu einem Prämix gibt und
(ii) den so erhaltenen Prämix mit den übrigen Inhaltsstoffen des Futtermittels und/oder Futtermittelzusatzstoffes mischt.

20. Tierfuttermittel enthaltend eine beschichtete Zubereitung gemäß den Ansprüchen 1 bis 5.

## Claims

1. A coated preparation comprising
as component A) at least one hydroformate of the general formula (I)
(I) M₃[HCOO]₃ ∗ HCOOH
where M = Na, K, Cs, NH₄, and
as component B) at least one coating material selected from the group consisting of
a) hardened vegetable oils/fats which are hydrogenated or partially hydrogenated and
b) benzoic acid and/or salts of benzoic acid and/or esters of benzoic acid and/or derivatives of benzoic acid and/or salts of benzoic acid derivatives and/or esters of benzoic acid derivatives.

2. The coated preparation according to claim 1 wherein the hydroformate is trisodium hydroformate.

3. The coated preparation according to claim 1 or 2, wherein the preparation comprises further constituents and/or additives and/or supports.

4. The coated preparation according to claims 1 to 3, wherein the coating material B) is hydrogenated palm oil, hydrogenated cottonseed oil, hydrogenated soybean oil.

5. The coated preparation according to claims 1 to 4, which is a powder with a median particle size of from 1 µm to 10,000 µm, in particular from 20 µm to 5 000 µm.

6. A process for preparing coated preparations according to claims 1 to 5, which comprises
(i) charging component A), if appropriate with admixture of further constituents and/or additives, and
(ii) coating the resultant mixture with component B), if appropriate together with further constituents.

7. A process for preparing coated preparations according to claims 1 to 5, which comprises
(i) charging component B), if appropriate with addition of further constituents, in a suitable apparatus, and
(ii) adding component A), if appropriate together with further constituents and/or additives.

8. A process for preparing coated preparations according to claim 6 or 7, which comprises applying component A), before the coating, to a support material.

9. A process for preparing coated preparations according to claims 1 to 5, which comprises
(i) dispersing component A), if appropriate together with further constituents and/or additives, in melts of component B), and
(ii) finely dividing and solidifying the resultant dispersions.

10. A process for preparing coated preparations according to claims 1 to 5, which comprises
(i) dispersing component A), if appropriate together with further constituents and/or additives, in component B)
(ii) emulsifying it in an aqueous solution of a protective colloid, preferably gelatin or/and gelatin derivatives or/and gelatin substitutes with addition of one or more substances selected from the group consisting of mono-, di- or polysaccharides, and
(iii) subjecting it to shaping by spraying and subsequent or simultaneous drying.

11. A process for preparing coated preparations according to claims 1 to 5, which comprises coating component A) by desublimating component B).

12. The use of a coated preparation according to claims 1 to 5 in premixes for animal feeds.

13. The use of a coated preparation according to claims 1 to 5 in feed additives and/or animal feeds, in particular for pigs, poultry and calves.

14. The use of the coated preparations according to claims 1 to 5 as performance enhancer and/or growth promoter.

15. The use of the coated preparations according to claims 1 to 5 as acidifier.

16. The use of the coated preparations according to claims 1 to 5 as preservative.

17. The use of the coated preparations according to claims 1 to 5 as silage additive.

18. The use of the coated preparations according to claims 1 to 5 in fertilizers.

19. A process for preparing a feed and/or feed additive, which comprises
(i) adding a coated preparation according to claims 1 to 5 to a premix, and
(ii) mixing the resultant premix with the remaining constituents of the feed and/or feed additive.

20. An animal feed comprising a coated preparation according to claims 1 to 5.

## Revendications

1. Préparation enrobée, contenant
en tant que composant A) au moins un hydroformiate de formule générale (I)
(I) M₃[HCOO]₃ . HCOOH
où M = Na, K, Cs, NH₄, et
en tant que composant B) au moins un agent d'enrobage choisi dans l'ensemble constitué par
a) des huiles/graisses végétales durcies qui sont hydrogénées ou partiellement hydrogénées, et
b) l'acide benzoïque et/ou des sels de l'acide benzoïque et/ou des esters de l'acide benzoïque et/ou des dérivés de l'acide benzoïque et/ou des sels des dérivés de l'acide benzoïque et/ou des esters des dérivés de l'acide benzoïque.

2. Préparation enrobée, selon la revendication 1, **caractérisée en ce qu'**on utilise comme hydroformiate de l'hydroformiate trisodique.

3. Préparation enrobée, selon la revendication 1 ou 2, **caractérisée en ce** la préparation contient d'autres composants et/ou additifs et/ou des supports.

4. Préparation enrobée, selon les revendications 1 à 3, **caractérisée en qu'**on utilise comme agent d'enrobage B) de l'huile de palme hydrogénée, de l'huile de graine de coton hydrogénée ou de l'huile de soja hydrogénée.

5. Préparation enrobée, selon les revendications 1 à 4, **caractérisée en qu'**elle se trouve sous forme de poudre ayant une taille moyenne de particule de 1 µm à 10 000 µm, en particulier de 20 µm à 5 000 µm.

6. Procédé pour la production de préparations enrobées, selon les revendications 1 à 5, **caractérisé en ce que**
(i) on dispose au préalable le composant A) éventuellement avec addition d'autres composants et/ou additifs et
(ii) on enrobe le mélange ainsi obtenu avec le composant B), éventuellement conjointement avec d'autres composants.

7. Procédé pour la production de préparations enrobées, selon les revendications 1 à 5, **caractérisé en ce que**
(i) on dispose au préalable dans un appareil approprié le composant B) éventuellement avec addition d'autres composants et
(ii) on ajoute le composant A), éventuellement conjointement avec d'autres composants et/ou additifs.

8. Procédé pour la production de préparations enrobées, selon la revendication 6 ou 7, **caractérisé en ce qu'**on applique le composant A) avant l'application sur un matériau de support.

9. Procédé pour la production de préparations enrobées, selon les revendications 1 à 5, **caractérisé en ce que**
(i) on disperse dans la masse fondue du composant B) le composant A), éventuellement conjointement avec d'autres composants et/ou additifs et
(ii) on fragmente et solidifie les dispersions ainsi obtenues.

10. Procédé pour la production de préparations enrobées, selon les revendications 1 à 5, **caractérisé en ce que**
(i) on disperse dans le composant B) le composant A), éventuellement conjointement avec d'autres composants et/ou additifs,
(ii) on émulsionne dans une solution aqueuse d'un colloïde protecteur, de préférence la gélatine et/ou des dérivés de gélatine et/ou des substituts de gélatine, avec addition d'une ou plusieurs substances choisies dans le groupe des mono-, di- ou polysaccharides et
(iii) on soumet à une mise en forme par pulvérisation et séchage simultané ou subséquent.

11. Procédé pour la production de préparations enrobées, selon les revendications 1 à 5, **caractérisé en ce qu'**on enrobe le composant A) par désublimation du composant B).

12. Utilisation d'une préparation enrobée, selon les revendications 1 à 5, dans des prémélanges pour aliments pour animaux.

13. Utilisation d'une préparation enrobée, selon les revendications 1 à 5, dans des additifs pour aliments pour animaux et/ou des aliments pour animaux, en particulier pour porcs, volailles et veaux.

14. Utilisation des préparations enrobées, selon les revendications 1 à 5, en tant stimulateur de rendement et/ou stimulateur de croissance.

15. Utilisation des préparations enrobées, selon les revendications 1 à 5, en tant qu'acidifiant.

16. Utilisation des préparations enrobées, selon les revendications 1 à 5, en tant que conservateur.

17. Utilisation des préparations enrobées, selon les revendications 1 à 5, en tant qu'agent d'ensilage.

18. Utilisation des préparations enrobées, selon les revendications 1 à 5, dans des fertilisants.

19. Procédé pour la fabrication d'un aliment pour animaux ou d'un additif pour aliments pour animaux, **caractérisé en ce que**
(i) on ajoute à un prémélange une préparation enrobée, selon les revendications 1 à 5, et
(ii) on mélange le prémélange ainsi obtenu avec les autres composants de l'aliment pour animaux et/ou de l'additif pour aliments pour animaux.

20. Aliment pour animaux, contenant une préparation enrobée selon les revendications 1 à 5.
